Europäisches Patentamt

European Patent Office

Office européen des brevets

(19)

(11) Numéro de publication : **0 069 403**
**B1**

(12) **FASCICULE DE BREVET EUROPÉEN**

(45) Date de publication du fascicule du brevet :
30.07.86

(51) Int. Cl.⁴ : **B 64 B 1/44**

(21) Numéro de dépôt : **82200441.2**

(22) Date de dépôt : **13.04.82**

(54) **Procédé pour stabiliser en altitude un ballon, et ballons atmosphériques adaptés pour la mise en œuvre de ce procédé.**

(30) Priorité : **08.07.81 FR 8113813**

(43) Date de publication de la demande :
**12.01.83 Bulletin 83/02**

(45) Mention de la délivrance du brevet :
**30.07.86 Bulletin 86/31**

(84) Etats contractants désignés :
**AT BE CH DE FR GB IT LI LU NL SE**

(56) Documents cités :
**FR-A- 389 486**
**US-A- 2 931 597**

(73) Titulaire : **CENTRE NATIONAL D'ETUDES SPATIALES
129, Rue de l'Université
F-75007 Paris (FR)**

(72) Inventeur : **Regipa, Robert
226, avenue Saint-Exupéry Bâtiment Provence
F-31400 Toulouse (FR)**

(74) Mandataire : **Barre, Philippe
Cabinet Barre-Gatti-Laforgue 95 rue des Amidonniers
F-31069 Toulouse Cedex (FR)**

## Description

L'invention concerne un procédé pour stabiliser en altitude un ballon atmosphérique comprenant des moyens pour faire varier son poids spécifique, tels que moyens de délestage, moyens d'évacuation de gaz aérostatique ou encore moyens pour ajuster la chaleur transmise à l'air contenue dans le ballon dans le cas d'un ballon aérostat du type montgolfière. L'invention s'étend aux ballons atmosphériques adaptés pour la mise en œuvre dudit procédé.

On sait que l'équilibre d'un ballon à une altitude déterminée dans une atmosphère dépend du volume d'atmosphère déplacé dont la masse doit être compensée par la somme des masses solides et gazeuses transportées par le ballon. L'état d'équilibre stable est obtenu à une altitude donnée, lorsque tout déplacement vertical du ballon s'accompagne de la modification d'au moins un paramètre (concernant le ballon ou l'atmosphère ambiante) ayant tendance à ramener le ballon à son point d'origine.

Ainsi, seul un ballon pressurisé dans lequel le gaz sous pression reste toujours à volume constant est stable de façon naturelle à une altitude donnée. Un ballon ouvert à sa partie inférieure est stable en montée en raison de l'évacuation naturelle du gaz aérostatique qui s'effectue à volume constant ; par contre il est instable en descente lorsque son volume décroît. Un ballon loin de son état de plénitude (c'est-à-dire à l'état flasque) est instable et monte ou descend au gré du bilan thermique régissant le volume de sa bulle de gaz et au gré de l'évolution de la masse de gaz (évolution provenant de divers phénomènes et notamment d'une diffusion à travers l'enveloppe).

Or, il est souvent souhaitable dans de nombreuses missions (en particulier dans les missions scientifiques) de maintenir pendant un certain temps un ballon à altitude constante ou lentement variable en montée ou descente et ceci, à une altitude désirée ou à plusieurs altitudes de pallier désirées ; fréquemment, les altitudes de palliers désirées correspondent à un état flasque du ballon.

Pour assurer cette stabilisation (par ce terme on attend aussi bien un maintien à altitude constante que l'obtention d'une montée ou d'une descente contrôlée), le processus généralement utilisé consiste à modifier le poids spécifique du ballon. On se reportera par exemple au brevet US-A-2 931 597 qui décrit un exemple de système de stabilisation de ce type. Le poids spécifique du ballon peut être modifié en assurant, soit un délestage (largage de lest), soit une évacuation d'une partie de son gaz aérostatique. Ces opérations sont déclenchées par des systèmes électromécaniques qui sont commandés, dans certains cas depuis le sol par une liaison radio-électrique de télécommande, dans d'autres cas à partir du ballon par des capteurs liés à celui-ci, qui réalisent des mesures de paramètres (généralement température et pression atmosphérique) permettant après exploitation de donner les ordres d'exécution. Toutefois, l'atmosphère ambiante n'est généralement pas calme (vents verticaux, turbulences, etc...) et l'obtention de paramètres exploitables est relativement complexe. Les matériels correspondants qui doivent fonctionner pendant toute la durée de vie du ballon et dans des ambiances parfois sévères s'écartant très fortement des normes de fonctionnement idéal des circuits d'alimentation et circuits électroniques (température inférieure à — 100 °C ou supérieure à + 100 °C) sont complexes, coûteux et pesants. De plus, ils sont généralement gros consommateurs de lest et, donc, mal adaptés à des missions du type exploration des planètes à atmosphère, pour lesquelles la masse totale du ballon doit être aussi réduite que possible (par ballon, on entend le ballon proprement dit et tout l'équipement embarqué).

La présente invention se propose de pallier les défauts des systèmes classiques et d'indiquer un nouveau procédé de stabilisation en altitude d'un ballon ; elle vise un procédé pour stabiliser un ballon atmosphérique du type comprenant des moyens adaptés pour faire varier son poids spécifique, en particulier moyens de délestage adaptés pour réduire la masse du ballon, moyens d'évacuation de son gaz aérostatique ou encore, dans le cas d'une montgolfière, brûleur alimenté en fluide de combustion.

Un objectif de l'invention est en particulier d'assurer la stabilisation du ballon au moyen d'un équipement considérablement simplifié, dont le coût et le poids soient notablement réduits par rapport à ceux des systèmes classiques.

Un autre objectif est de fournir des nouvelles formes de ballons, mieux adaptées aux missions comportant des stabilisations à altitudes prédéterminées.

Par rapport au document US-A-2 931 597 qui décrit déjà un procédé pour stabiliser en altitude un ballon atmosphérique comprenant des moyens adaptés pour faire varier son poids spécifique, l'invention consiste à utiliser un ballon équipé d'un lien interpolaire s'étendant entre son pôle supérieur et son pôle inférieur et à commander les moyens adaptés pour faire varier le poids spécifique du ballon par l'entremise de ce lien interpolaire de sorte qu'une augmentation de la tension T appliquée audit lien et provoquée par la déformation de l'enveloppe du ballon agisse sur ces moyens dans le sens d'une réduction du poids spécifique.

Par « lien interpolaire » on attend tout élément ou ensemble d'éléments longiformes, s'étendant entre les pôles et matériellement rattachés soit aux pôles eux-mêmes ou à proximité de ceux-ci soit à des organes auxiliaires prévus au voisinage ou autour des pôles. A titre d'exemples non limitatifs, ce lien qui sera généralement souple peut être un câble, plusieurs câbles, une manche souple ou plusieurs manches, etc...

Le ballon utilisé peut être du type de celui

décrit dans la demande de brevet français 80.00343 (FR-A-2 472 971) déposée le 4 janvier 1980 par le demandeur, ce ballon possédant une enveloppe à symétrie de révolution autour d'un axe, pourvue d'une portion approximativement cylindrique.

La longueur L du lien interpolaire est ajustée en fonction de la mission envisagée, à une valeur dépendant de la distance naturelle $D_p$ séparant les deux pôles lorsque le ballon est à l'état de plénitude. Pour maintenir un ballon à l'état flasque à une altitude constante ou lentement variable, cette longueur L sera généralement ajustée à une valeur $Lo \geqslant D_p$.

Quand le ballon descend à partir de son état de plénitude la distance D entre pôles augmente depuis la valeur $D_p$ ; en l'absence de lien interpolaire, cette distance pourrait croître jusqu'à atteindre une valeur limite $D_F$ très proche de la longueur des fuseaux de l'enveloppe. En présence du lien interpolaire (de longueur supérieure à $D_p$ mais inférieure à $D_F$), lorsque la distance D entre pôles devient égale à la longueur $L_o$ du lien, apparaît une tension T sur le lien, qui augmente tant que la descente continue et ne peut diminuer que si le ballon remonte.

Selon l'invention, cette tension T est utilisée pour actionner les moyens permettant de faire varier le poids spécifique du ballon : lorsque cette tension s'élève au-dessus d'un seuil, elle agit sur ces moyens dans le sens d'une réduction du poids spécifique ce qui freine la descente et stabilise le ballon.

Dans le cas d'un ballon équipé de moyens de délestage (en soi classiques), ces moyens sont commandés par le lien interpolaire de façon à engendrer un délestage lorsque la tension T devient supérieure à un seuil de tension $t_d$ prédéterminé.

Dans le cas d'une montgolfière à air chaud, dotée d'un brûleur alimenté en fluide de combustion par des moyens appropriés, le débit de fluide de combustion est commandé par le lien interpolaire de sorte que ledit débit augmente lorsque la tension T s'élève au-dessus d'un seuil $t'_d$ prédéterminé.

Pour certaines missions et certains types de ballons, la stabilisation en descente par le procédé ci-dessus défini suffit (compte tenu en particulier de la stabilité naturelle en montée que possèdent certains ballons comme cela a déjà été évoqué).

Dans d'autres cas, on utilisera un ballon comprenant des moyens pour faire varier son poids spécifique aussi bien dans le sens d'une réduction que dans celui d'une augmentation. Selon le procédé de l'invention, ces moyens sont commandés par l'entremise du lien interpolaire de sorte qu'une augmentation de la tension T dudit lien agisse sur ces moyens dans le sens d'une réduction du poids spécifique et qu'une diminution de ladite tension agisse dans le sens d'une augmentation dudit poids spécifique.

Dans le cas d'un ballon atmosphérique comprenant des moyens de délestage et des moyens d'évacuation du gaz aérostatique, le lien commande le délestage lorsque sa tension s'élève au-dessus du seuil $t_d'$ et commande l'évacuation lorsque cette tension s'abaisse au-dessous d'un seuil te $<$ td. Pour stabiliser le ballon à une altitude de palier désirée, il suffit d'ajuster la longueur L du lien interpolaire et les seuils te et td, de façon que la tension T s'appliquant sur le lien à l'altitude de palier désirée soit comprise entre te et td. Aucune action n'est déclenchée par le lien tant que sa tension demeure entre ses valeurs (c'est-à-dire tant que le ballon demeure à l'altitude de palier désirée). Si, pour quelque raison que ce soit, le ballon se met à descendre, la tension T augmente et à partir du seuil td engendre un délestage qui s'accompagne d'un arrêt de la descente puis d'une remontée. Si au contraire, le ballon se met à monter, la tension T diminue et au-dessous du seuil $t_e$ engendre une évacuation du gaz aérostatique qui s'accompagne d'un arrêt de la montée et d'une redescente. Il est à noter que la condition $t_e < t_d$ évite que puissent en même temps se produire un délestage et une évacuation de gaz aérostatique.

Dans le cas d'une montgolfière à air chaud, le débit de gaz de combustion est commandé par le lien interpolaire de façon à augmenter à partir d'une valeur d'équilibre lorsque la tension T du lien s'élève au-dessus du seuil $t'_d$ et à diminuer à partir de cette valeur d'équilibre lorsque la tension T s'abaisse au-dessous d'un seuil $t'_e \leqslant t'_d$.

La présente invention s'étend à un ballon atmosphérique pour la mise en œuvre du procédé décrit précédemment. Ce ballon comprend une enveloppe en un matériau souple étanche, un réservoir à lest situé au-dessous du ballon, un organe de délestage associé au réservoir pour engendrer sur commande un largage de lest, comme connu du document US-A-2 931 597, et, le cas échéant, une ouverture d'évacuation de gaz aérostatique pratiquée dans son enveloppe avec un organe mobile de fermeture de celle-ci ; selon la présente invention, ledit ballon est équipé d'un lien interpolaire s'étendant entre son pôle supérieur et son pôle inférieur, ledit lien étant accouplé à l'organe de délestage de façon à actionner celui-ci à partir d'un seuil de tension $t_d$ prédéterminée et, le cas échéant, à l'organe mobile de fermeture de façon à actionner celui-ci dans le sens de la fermeture à partir d'un seuil de tension $t_e$ déterminé.

L'invention s'étend également à un ballon aérostat du type montgolfière, comprenant une enveloppe en un matériau souple, ouverte à son pôle inférieur, un brûleur accroché au voisinage de celui-ci et des moyens d'alimentation dudit brûleur en fluide de combustion à partir d'un réservoir ; selon l'invention, ledit ballon aérostat comprend un lien interpolaire s'étendant entre son pôle supérieur et son pôle inférieur, ledit lien étant accouplé aux moyens d'alimentation du brûleur de façon à ajuster le débit du fluide de combustion en fonction directe de la tension dudit lien.

D'autres caractéristiques, buts et avantages de l'invention se dégageront de la description qui suit en référence aux dessins annexés, lesquels en présentent des exemples de réalisation destinés à illustrer l'invention ; sur ces dessins :

la figure 1 est une vue schématique d'un mode de réalisation de ballon atmosphérique conforme à l'invention,

la figure 2 est une vue de détail en coupe axiale de la partie inférieure de celui-ci et la figure 3 un diagramme des forces s'exerçant sur l'organe de délestage du ballon,

les figures 4a à 4e et 5a à 5e sont des schémas explicatifs illustrant le fonctionnement des organes du ballon, cependant que la figure 6 est un diagramme schématisant la trajectoire du ballon,

la figure 7 est une vue de détail en coupe axiale de la partie basse d'une variante de ballon,

la figure 8 est une vue en coupe axiale partielle d'un autre mode de réalisation de ballon,

la figure 9 est une vue schématique d'un ballon aérostat du type montgolfière équipé conformément à l'invention,

la figure 10 est une vue schématique de détail, illustrant le dispositif de commande du débit de gaz de combustion de ladite montgolfière.

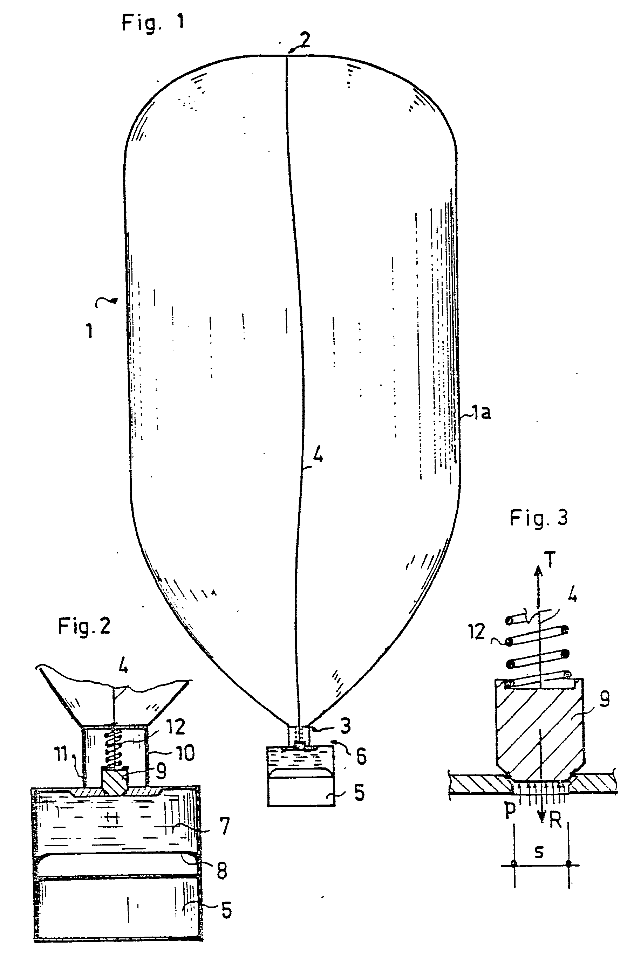

Le ballon aérostatique représenté à titre d'exemple aux figures 1 et 2 est un ballon pressurisé constitué par une enveloppe 1 dont les pôles supérieur 2 et inférieur 3 sont réunis par un lien 4 ; au-dessous du pôle inférieur 3 est disposée une nacelle 5 associée à des moyens de délestage 6.

L'enveloppe 1 peut être fabriquée par le procédé décrit dans la demande ·de brevet n° 80.00343 déjà évoquée, à partir d'une pluralité de fuseaux en film de polyéthylène apte à supporter des tensions tangentielles selon toutes les directions de son plan (circonférentielles et longitudinales). Ces fuseaux présentent une portion rectangulaire de sorte que leur assemblage le long de leurs bords permet d'obtenir une enveloppe ayant une portion cylindrique 1a qui se prolonge en partie haute et basse par des portions convergeant vers les pôles du ballon.

Le lien 4 peut être un câble souple non extensible. En l'exemple, au niveau du pôle supérieur ce lien est attaché à une pièce en forme de disque sur laquelle sont fixées les extrémités supérieures des fuseaux de l'enveloppe. En partie basse, au niveau du pôle inférieur, le lien 4 est accouplé aux moyens de délestage comme le montre la figure 2 de façon à actionner ces derniers à partir d'un seuil de tension $t_d$ s'appliquant sur ce lien.

En l'exemple, les moyens de délestage comprennent un réservoir de fluide 7 qui est maintenu sous pression par un gaz de pressurisation séparé du fluide par une membrane souple 8. Le fluide qui constitue le lest peut notamment être constitué par du fréon liquide qui se vaporise lorsqu'il est libéré.

Le réservoir 7 est doté d'un orifice de sortie avec lequel est apte à coopérer un clapet 9 faisant office d'organe de délestage. Le clapet 9 est logé dans un corps cylindrique 10 qui est porté par le ballon et sert de liaison entre celui-ci et la nacelle ; ce corps est percé de trous d'évacuation tels que 11 pour permettre l'échappement du fluide-lest vers l'extérieur lorsque le clapet 9 est ouvert.

Au niveau du pôle inférieur, le lien 4 est agencé pour pénétrer de façon sensiblement étanche dans le corps 10 et est fixé à son extrémité inférieure au clapet de délestage 9. Des moyens élastiques tels que ressort 12 sont disposés dans le corps 10 de façon à solliciter le clapet vers sa position de fermeture ; ce ressort 12 est taré et permet d'ajuster le seuil de tension $t_d$ à partir duquel le lien 4 commande l'ouverture du clapet.

Les forces agissant sur le clapet sont les suivantes (Fig. 3) :

la tension du lien T dirigée vers le haut,

la force p. s dirigée vers le haut provenant de la pression p du fluide sur le clapet (surface s),

la force de rappel du ressort dirigée vers le bas, qui à l'état fermé est égale à R.

Le clapet 9 s'ouvre dont à partir d'un seuil de tension $t_d = R - ps$ et demeure ouvert tant que la tension $T \geq t_d$.

Si K est le coefficient d'élasticité du ressort, le déplacement vers le haut $\triangle x$ du clapet s'écrit, pour une tension $T \geq t_d$ du lien :

$$\triangle x = K (T + ps - R)$$

Ce déplacement est donc proportionnel à la tension T de sorte que la masse de lest éjectée est directement liée à la tension T et à la durée d'action de cette tension : ceci permet d'obtenir une stabilisation du ballon à une altitude dépendant des paramètres du système, avec des oscillations dont l'amplitude dépend également de ces paramètres.

En l'exemple des figures 2 et 3, le clapet 9 est à fonctionnement symétrique, c'est-à-dire que le seuil de tension $t_d$ à partir duquel il s'ouvre, est égal au seuil à partir duquel il se referme (la surface utile du clapet sur laquelle agit le fluide-lest étant la même que le clapet soit ouvert ou fermé).

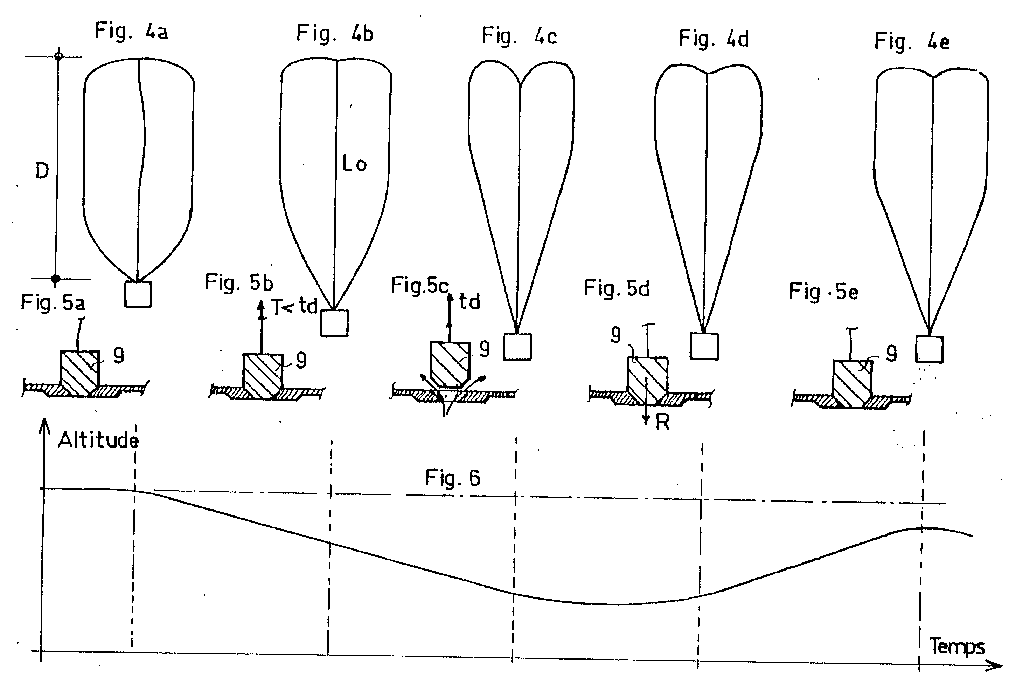

Dans ces conditions, les oscillations du ballon sont amorties et celui-ci a tendance à se stabiliser à une altitude d'équilibre. On a schématisé aux figures 4a à 4e, 5a à 5e et 6 le comportement d'un tel ballon. L'on suppose que le ballon est initialement à l'état de plénitude à une altitude maximum (Fig. 4a). La longueur Lo de son lien interpolaire est ajustée à une valeur supérieure à la distance naturelle $D_p$ séparant les pôles dans cet état : le lien est détendu et le clapet de délestage est fermé (Fig. 5a).

Par un phénomène de diffusion à travers l'enveloppe (ou par tout autre phénomène : fuite calibrée, évacuation de gaz aérostatique...) l'on suppose que le ballon se met à descendre ; l'enveloppe se déforme et la distance entre pôles augmente jusqu'à devenir égale à la longueur Lo du lien (Fig. 4b) : une faible tension T apparaît et s'applique sur le lien (Fig. 5). Cette tension est inférieure au seuil $t_d$ et le ballon continue à descendre.

La tension T augmente jusqu'à atteindre la valeur $t_d$ (Fig 4c) : le clapet 9 s'ouvre et réalise le début de délestage (Fig. 5c).

La vitesse de descente du ballon décroît jusqu'à s'annuler et le ballon remonte sous l'effet du délestage qui se poursuit ; la tension T décroît alors jusqu'à revenir à la tension $t_d$ (Fig. 4d). Le clapet se referme et stoppe l'éjection de lest.

La vitesse de montée décroît jusqu'à s'annuler : le ballon culmine à une altitude inférieure à celle correspondant à son état de plénitude (Fig 4e). Le lien demeure en tension mais la valeur de celle-ci est inférieure au seuil $t_d$ ; on obtient ainsi une stabilisation du ballon avec une trajectoire constituée par une succession d'oscillation amorties.

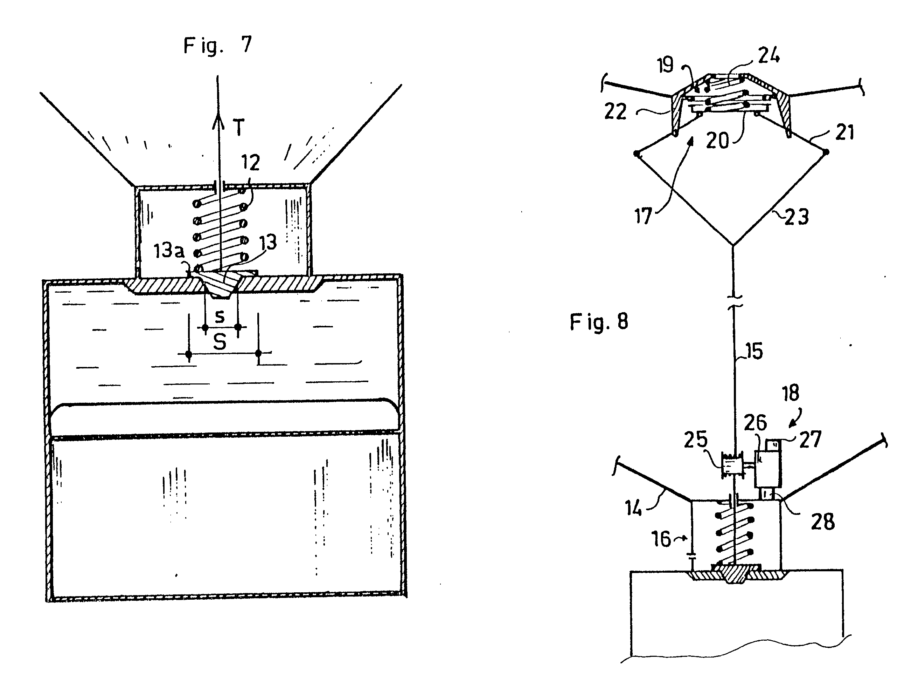

Dans la variante représentée à la figure 7, le clapet 13 est à fonctionnement dissymétrique et possède un talon 13a de surface utile S supérieure à la surface s de la partie s'appliquant sur le siège. Un tel clapet, à l'état fermé, s'ouvre lorsque la tension T atteint le seuil $t_d$ mais se referme ensuite quand cette tension devient inférieure à un seuil de fermeture différent $\theta_d$ avec $\theta_d > t_d$ ; ainsi une fois ouvert, ce clapet demeure dans cet état tant que la tension reste supérieure à $\theta_d$.

Dans ces conditions, il est possible d'obtenir une stabilisation du ballon avec des oscillations verticales plus importantes et non amorties. Cette disposition est en particulier intéressante pour assurer l'exploration d'une atmosphère entre deux altitudes déterminées.

La figure 8 représente en vue partielle un autre mode de réalisation dans lequel le ballon composé d'une enveloppe 14 du même type que le précédent avec un lien interpolaire 15 comprend :

des moyens de délestage 16 situés au-dessous du pôle inférieur et analogues à ceux décrits précédemment,

des moyens d'évacuation de gaz aérostatique 17 situés au niveau du pôle supérieur,

des moyens 18 de réglage de la longueur du lien interpolaire 15.

Les moyens d'évacuation 17 sont composés par une ouverture d'évacuation 19 pratiquée dans l'enveloppe et par un organe mobile de fermeture de celle-ci 20. Le lien interpolaire 15 est accouplé en partie haute à cet organe 20 de façon à actionner celui-ci dans le sens de la fermeture à partir d'un seuil de tension $t_e$ déterminé.

En l'exemple, l'organe de fermeture 19 est formé, d'une part, par un clapet situé en regard et au-dessous d'une portée entourant l'ouverture d'évacuation 19, d'autre part, par des leviers inverseurs 21 qui sont solidarisés à l'enveloppe par l'intermédiaire de potences 22 rattachées en un point intermédiaire de la longueur desdits leviers. Chaque levier inverseur 21 est lié par une extrémité au clapet 19 et par l'autre au lien interpolaire 15 grâce à des câbles auxiliaires 23, de sorte qu'une tension T exercée par le lien vers le bas a tendance à actionner le clapet 19 dans le sens de la fermeture.

Ce clapet est associé à des moyens élastiques tels que ressort 24, qui le sollicitent vers sa position d'ouverture. Ces moyens sont tarés de façon à ajuster le seuil de tension d'évacuation $t_e$ à une valeur prédéterminée (seuil au-dessous duquel le clapet 19 est ouvert et au-dessus duquel il est fermé). Si le seuil de tension de délestage est $t_d$, le tarage est prévu de sorte que $t_e < t_d$.

Ainsi, pour une tension T inférieure à $t_e$, il y a évacuation du gaz aérostatique et le ballon a tendance à descendre ou à freiner une éventuelle ascension ; pour une tension T comprise entre $t_e$ et $t_d$, il n'y a ni évacuation de gaz aérostatique ni délestage et les moyens de l'invention n'opèrent aucune action sur le ballon. Enfin, pour une tension T supérieure à $t_d$, il y a délestage et le ballon a tendance à monter ou à freiner une éventuelle descente.

En conséquence, le ballon tend à revenir dans une tranche d'altitude correspondant à $t_e \leqslant T \leqslant t_d$. Pour des moyens de délestage 16 et moyens d'évacuation 17 dont les paramètres sont prédéfinis, cette tranche d'altitude peut être ajustée en réglant la longueur L du lien interpolaire à une valeur appropriée supérieure ou égale à la distance naturelle $D_p$ entre pôles à l'état de plénitude.

Dans l'exemple de la figure 8, le ballon est équipé de moyens de réglage 18 de cette longueur qui peuvent affecter à celle-ci plusieurs valeurs $L_1$, $L_2$... selon un programme prédéfini. Le ballon est ainsi adapté pour explorer successivement plusieurs tranches d'altitudes.

Ces moyens de réglage 18 peuvent en particulier comprendre des moyens d'enroulement du lien tels que tambour 25, des moyens d'entrainement en rotation de ces moyens d'enroulement tels que le treuil 26 et des moyens de commande tels que logique de commande 27 agissant sur le treuil selon des séquences prédéterminées. L'ensemble peut être porté par l'enveloppe grâce à une platine support 28 située de préférence au voisinage du pôle inférieur (mais qui peut également être disposé près du pôle supérieur). La logique de commande 27 peut être préréglée pour assurer le déroulement d'un programme préétabli ou encore être télécommandée.

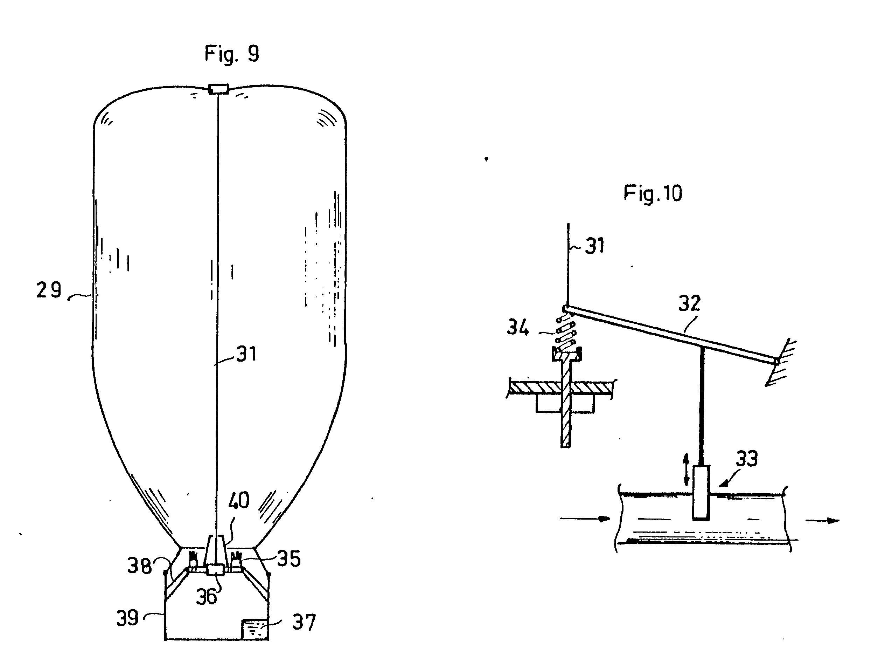

Par ailleurs, à titre d'exemple complémentaire, les figures 9 et 10 illustrent l'application de l'invention au cas d'une montgolfière à air chaud. Celle-ci est constituée par une enveloppe 29 en un matériau souple, ouverte à son pôle inférieur et qui peut posséder comme précédemment une portion cylindrique ; elle est équipée d'un brûleur constitué en l'exemple par une rampe circulaire 35 reliée à des moyens d'alimentation comprenant un boîtier 36 de commande du débit de gaz et un réservoir sous pression 37. Ce boîtier et la rampe sont fixés sur un support rigide 38 relié à la nacelle 39.

La montgolfière est munie d'un lien interpolaire 31 s'étendant entre son pôle supérieur et son pôle inférieur ; ce lien est accouplé au boîtier 31 d'alimentation du brûleur de façon à ajuster le débit de fluide de combustion en fonction directe de la tension s'appliquant sur ledit lien. Dans sa partie basse, le lien est protégé par un cône de protection thermique 40 dont la face externe est aluminisée.

Le lien 31 peut agir sur un levier pivotant 32 qui commande une vanne d'obturation du circuit d'alimentation du brûleur (schématisée en 33). Un ressort de rappel 34 associé à un système de tarage permet de régler l'altitude d'équilibre en fonction des divers paramètres du système.

En cas de descente au-dessous de cette altitude, la tension augmente et engendre une augmentation du débit de gaz de combustion par rapport à sa valeur d'équilibre ; la température du gaz ascensionnel s'élève et le taux de descente diminue jusqu'à arrêt de la montgolfière et remontée de celle-ci.

En phase d'ascension au-dessus de l'altitude d'équilibre, le processus inverse se déroule et, par une diminution de la température du gaz, la montgolfière est amenée à redescendre.

## Revendications

1. Procédé pour stabiliser en altitude un ballon atmosphérique comprenant des moyens adaptés pour faire varier son poids spécifique, ledit procédé étant caractérisé en ce qu'il consiste à utiliser un ballon équipé d'un lien interpolaire (4, 15, 31) s'étendant entre son pôle supérieur et son pôle inférieur et à commander les moyens adaptés pour faire varier le poids spécifique du ballon par l'entremise de ce lien interpolaire de sorte qu'une augmentation de la tension $T$ appliquée audit lien et provoquée par la déformation de l'enveloppe du ballon agisse sur ces moyens dans le sens d'une réduction du poids spécifique.

2. Procédé selon la revendication 1, appliqué à un ballon comprenant des moyens de délestage (7-12) adaptés pour réduire le poids du ballon sans modifier sensiblement son volume, caractérisé en ce que les moyens de délestage sont commandés par le lien interpolaire (4) de façon à engendrer un délestage du ballon lorsque la tension $T$ dudit lien devient supérieure à un seuil $t_d$ prédéterminé.

3. Procédé selon la revendication 2, caractérisé en ce que, en cours de délestage pour une tension $T > t_d$, les moyens de délestage (7-13) sont commandés par le lien interpolaire (4) de façon à éjecter une masse de lest directement liée à la tension $T$ du lien interpolaire et à la durée d'action de cette tension.

4. Procédé selon la revendication 1, appliqué à une montgolfière à air chaud, dotée d'un brûleur (35) alimenté en fluide de combustion, caractérisé en ce que le débit de fluide de combustion est commandé par le lien interpolaire (31) de sorte que ledit débit augmente lorsque la tension $T$ du lien s'élève au-dessus d'un seuil $t'_d$ prédéterminé ;

5. Procédé selon l'une des revendications 1, 2, 3 ou 4, permettant de maintenir un ballon à l'état flasque à altitude constante ou lentement variable, caractérisé en ce qu'on ajuste la longueur $L_0$ du lien interpolaire à une valeur supérieure ou égale à la distance naturelle $D_p$ séparant les deux pôles lorsque le ballon est à l'état de plénitude.

6. Procédé selon l'une des revendications précédentes, appliqué à un ballon comprenant des moyens (16, 17) pour faire varier son poids spécifique dans le sens d'une réduction ou dans le sens d'une augmentation, caractérisé en ce que l'on commande lesdits moyens par l'entremise du lien interpolaire (15) de sorte qu'une augmentation de la tension $T$ dudit lien agisse sur ces moyens dans le sens d'une réduction du poids spécifique et qu'une diminution de ladite tension agisse sur ces moyens dans le sens d'une augmentation dudit poids spécifique.

7. Procédé selon la revendication 6, appliqué à un ballon atmosphérique comprenant des moyens de délestage (16) permettant de réduire la masse du ballon, et des moyens d'évacuation du gaz aérostatique (17) permettant d'augmenter son poids spécifique, ledit procédé étant caractérisé en ce que les moyens de délestage sont commandés par le lien interpolaire (15) de façon à engendrer un délestage lorsque la tension $T$ dudit lien devient supérieure à un seuil $t_d$; et en ce que les moyens d'évacuation du gaz aérostatique sont commandés par le lien (15) de façon à engendrer une évacuation lorsque la tension $T$ dudit lien devient inférieure à un seuil $t_e < t_d$.

8. Procédé selon la revendication 7, permettant de stabiliser un ballon à plusieurs altitudes de palier ajustables, caractérisé en ce que l'on amène la longueur du lien interpolaire (15) à varier en vue de l'ajuster pour chaque altitude de palier à une longueur $L$, telle que la tension $T$ dudit lien à cette altitude soit comprise entre $t_e$ et $t_d$.

9. Procédé selon la revendication 6, appliqué à une montgolfière à air chaud, dotée d'un brûleur (35) alimenté en fluide de combustion, caractérisé en ce que le débit de gaz de combustion est commandé par le lien interpolaire (31) de façon à augmenter à partir d'une valeur d'équilibre lorsque la tension $T$ du lien s'élève au-dessus d'un seuil $t'_d$ et à diminuer à partir de cette valeur d'équilibre lorsque la tension $T$ s'abaisse au-dessous d'un seuil $t'_e \leq t'_d$.

10. Ballon atmosphérique pour la mise en œuvre du procédé conforme à la revendication 1, comprenant une enveloppe (1) en un matériau souple étanche, un réservoir à lest (7) situé au-dessous du ballon et un organe de délestage (9, 13) associé au réservoir et adapté pour engendrer sur commande un largage de lest, ledit ballon étant caractérisé en ce qu'il comprend un lien interpolaire (4, 15) s'étendant entre son pôle supérieur (2) et son pôle inférieur (3), ledit lien étant accouplé à l'organe de délestage de façon à actionner celui-ci à partir d'un seuil de tension $t_d$ déterminé.

11. Ballon selon la revendication 10, dans lequel le réservoir à lest (7) est un réservoir de fluide sous pression accroché au pôle inférieur du ballon, et l'organe de délestage (9, 13) est un clapet coopérant avec un orifice de sortie du réservoir, caractérisé en ce que le lien (4, 15) est fixé à son extrémité inférieure au clapet de délestage (9).

12. Ballon selon la revendication 11, caractérisé en ce que le clapet de délestage (9) est équipé de moyens élastiques (12) le sollicitant vers sa position de fermeture, lesdits moyens élastiques étant tarés en vue d'ajuster le seuil de tension d'ouverture $t_d$.

13. Ballon selon la revendication 12, caractérisé en ce que le clapet de délestage (13), agencé pour s'ouvrir au-dessus du seuil de tension $t_d$, est adapté pour se refermer ensuite au-dessous d'un seuil de tension de fermeture $\theta_d < t_d$, de sorte que ledit clapet une fois ouvert demeure dans cet état tant que la tension reste supérieure à $\theta_d$.

14. Ballon selon la revendication 12, caractérisé en ce que le clapet de délestage (9), agencé pour s'ouvrir au-dessus du seuil de tension $t_d$, est adapté pour se refermer ensuite au-dessous du même seuil de tension.

15. Ballon selon l'une des revendications 10, 11, 12, 13 ou 14, comprenant une ouverture d'évacuation de gaz aérostatique pratiquée dans son enveloppe et un organe mobile de fermeture de celle-ci (20), caractérisé en ce que le lien interpolaire (15) est accouplé à l'organe de fermeture (20) de façon à actionner celui-ci dans le sens de la fermeture à partir d'un seuil de tension $t_e$ déterminé.

16. Ballon selon la revendication 15, dans lequel l'ouverture d'évacuation et l'organe mobile de fermeture (20) sont disposés au niveau du pôle supérieur du ballon, caractérisé en ce que le lien (15) est attaché par son extrémité supérieure à l'organe de fermeture (20) de façon à pouvoir l'actionner dans le sens de la fermeture, ledit organe (20) étant associé à des moyens élastiques (24) le sollicitant vers sa position d'ouverture.

17. Ballon selon la revendication 16, caractérisé en ce que l'organe de fermeture (20) comprend, d'une part, un clapet situé en regard et au-dessous d'une portée entourant l'ouverture d'évacuation, d'autre part, des leviers inverseurs (21) solidarisés à l'enveloppe en un point intermédiaire de leur longueur, chaque levier inverseur (21) étant lié par une extrémité au clapet et par l'autre au lien interpolaire.

18. Ballon selon l'une des revendications 16 ou 17, caractérisé en ce que les moyens élastiques (24) sont tarés de façon à ajuster le seuil de tension d'évacuation $t_e$ à une valeur prédéterminée, inférieure à celle du seuil de tension de délestage $t_d$.

19. Ballon selon l'une des revendications précédentes, caractérisé en ce que la longueur Lo de son lien interpolaire est supérieure ou égale à la distance séparant les pôles supérieur et inférieur du ballon à l'état de plénitude.

20. Ballon selon l'une des revendications précédentes, caractérisé en ce qu'il comprend des moyens (18) de réglage de la longueur du lien interpolaire.

21. Ballon selon la revendication 20, caractérisé en ce que les moyens de réglage précités (18) comprennent des moyens d'enroulement du lien (25), portés par l'enveloppe au voisinage de son pôle inférieur ou supérieur de façon à être situés sur le trajet dudit lien, des moyens (26) d'entraînement en rotation desdits moyens d'enroulement et des moyens (27) de commande de ces moyens d'entraînement selon des séquences prédéterminées.

22. Ballon selon l'une des revendications précédentes, possédant une enveloppe (1) à symétrie de révolution autour d'un axe, laquelle comporte une portion approximativement cylindrique (1a) ainsi qu'un pôle supérieur (2) et un pôle inférieur (3) situés sur l'axe de révolution et reliés entre eux par un lien (4) de nature non extensible ou peu extensible.

23. Ballon aérostat du type montgolfière en vue de la mise en œuvre du procédé conforme à la revendication 1, comprenant une enveloppe (29) en un matériau souple, ouverte à son pôle inférieure, un brûleur (35) accroché au voisinage de celui-ci et des moyens d'alimentation dudit brûleur en fluide de combustion à partir d'un réservoir, ledit ballon étant caractérisé en ce qu'il comprend un lien interpolaire (31) s'étendant entre son pôle supérieur et son pôle inférieur, ledit lien étant accouplé aux moyens d'alimentation du brûleur de façon à ajuster le débit du fluide de combustion en fonction directe de la tension dudit lien.

## Claims

1. Process for controlling the height of an air balloon, comprising means designed to vary its specific gravity, said process being characterised in that it consists in using a balloon, equipped with an interpolar link (4, 15, 31), which extends between its upper pole and its lower pole, and controlling the means designed to vary the specific gravity of the balloon by inserting this interpolar link in such a way that an increase in the tension T applied to said link and caused by the deformation of the balloon envelope, acts on these means so as to reduce the specific gravity.

2. Process according to Claim 1, applied to a balloon comprising unballasting means (7 to 12), designed to reduce the weight of the balloon without altering its weight appreciably, characterised in that the unballasting means are controlled by the interpolar link (4), so as to bring about unballasting of the balloon when the tension T on said link becomes greater than a predetermined threshold value $t_d$.

3. Process according to Claim 2, characterised in that, during the course of unballasting at a tension T, being greater than $t_d$, the unballasting means (7 to 13) are controlled by the interpolar link (4), so as to eject a mass of ballast which is directly related to the tension T on the interpolar link and to the duration of action of that tension.

4. Process according to Claim 1, applied to a hot air balloon, provided with a burner (35) supplied with combustion fluid, characterised in that the flow rate of the combustion fluid is controlled by the interpolar link (31) in such a way that said flow rate increases when the tension T on the link rises above a predetermined threshold value $t'_d$.

5. Process according to one of the Claims 1, 2, 3 or 4, enabling a balloon to be kept in the slack state at constant or slowly variable altitude, characterised in that the length Lo of the interpolar link is adjusted to a value higher than, or equal to, the natural distance $D_p$ between the two poles when the balloon is in the filled state.

6. Process according to one of the preceding claims, applied to a balloon comprising means (16, 17) for varying its specific gravity, so as to reduce it or so as to increase it, characterised in that said means are controlled by inserting the interpolar link (15) in such a way that an increase in the tension T on said link acts on these means so as to reduce the specific gravity and a decrease in said tension acts on these means so as to increase said specific gravity.

7. Process according to Claim 6, applied to an air balloon comprising unballasting means (16), enabling the mass of the balloon to be reduced, and means for evacuating the aerostatic gas (17), enabling its specific gravity to be increased, said process being characterised in that the unballasting means are controlled by the interpolar link (15) so as to bring about unballasting when the tension T on said link becomes greater than a threshold value $t_d$ and that the means for evacuating the aerostatic gas are controlled by the link (15) so as to bring about evacuation when the tension T on said link becomes less than a threshold value $t_e$ which is lower than $t_d$.

8. Process according to Claim 7, enabling a balloon to be controlled at several adjustable flight level heights, characterised in that the length of the interpolar link (15) is made to vary with a view to adjusting it for any flight level height to a length L such that the tension T on said link at that altitude lies between $t_e$ and $t_d$.

9. Process according to Claim 6, applied to a hot air balloon provided with a burner (35) which is supplied with combustion fluid, characterised in that the flow rate of the combustion fluid is controlled by the interpolar link (31) so as to increase from an equilibrium value when the tension T on the link rises above a threshold value $t'_d$ and to decrease from that equilibrium value when the tension T drops below a threshold value $t'_e$ which is less than, or equal to, $t'_d$.

10. Air balloon for carrying out the process according to Claim 1, comprising an envelope (1) of flexible tight material, a ballast reservoir (7) located below the balloon and an unballasting element (9, 13), associated with the reservoir and designed to bring about dropping of ballast in response to a control action, said balloon being characterised in that it comprises an interpolar link (4, 15) which extends between its upper pole (2) and its lower pole (3), said link being coupled with the unballasting element so as to set the latter in action above a specified tension treshold value $t_d$.

11. Balloon according to Claim 10 in which the ballast reservoir (7) is a reservoir for fluid under pressure, attached at the lower pole of the balloon, and the unballasting element (9, 13) is a valve interacting with an outlet orifice of the reservoir, characterised in that the link (4, 15) is fixed by its lower end to the unballasting valve (9).

12. Balloon according to Claim 11, characterised in that the unballasting valve (9) is equipped with elastic means (12) which draw it into its closed position, said elastic means being calibrated with a view to adjusting the threshold value for the opening tension $t_d$.

13. Balloon according to Claim 12, characterised in that unballasting valve (13), made to open above the threshold value for tension $t_d$, is designed then to close again below a threshold value for the closing tension $\theta_d$, which is less than $t_d$, so that said valve, once opened, remains in that state as long as the tension stays above $\theta_d$.

14. Balloon according to Claim 12, characterised in that the unballasting valve (9), made to open above the threshold value for tension $t_d$, is designed then to close again below the same threshold value for tension.

15. Balloon according to one of the Claims 10, 11, 12, 13 or 14, comprising an evacuation aperture for aerostatic gas, made in its envelope, and a movable element for closing the latter (20), characterised in that the interpolar link (15) is coupled with the closure element (20), so as to operate the latter in the direction of closure upwards of a specified threshold value for tension $t_e$.

16. Balloon according to Claim 15 in which the evacuation aperture and the movable closure element (20) are placed on the level of the upper pole of the balloon, characterised in that the link (15) is attached by its upper end to the closure element (20), enabling it to operate the latter in the direction of closure, said element (20) being associated with elastic means (24) which draw it towards its opening position.

17. Balloon according to Claim 16, characterised in that the closure element (20) comprises, on the one hand, a valve located opposite and below a surface surrounding the evacuation aperture and, on the other hand, reversing levers (21), integrated with the envelope at an intermediate point of their length, each reversing lever (21) being connected by one end to the valve and by the other to the interpolar link.

18. Balloon according to either Claim 16 or 17, characterised in that the elastic means (24) are calibrated so as to adjust the threshold value for the evacuation tension $t_e$ to a predetermined value, which is lower than the threshold value for the unballasting tension $t_d$.

19. Balloon according to one of the preceding claims, characterised in that the length Lo of its interpolar link is greater than, or equal to, the distance between the upper and lower poles of the balloon in the filled state.

20. Balloon according to one of the preceding claims, characterised in that it comprises means (18) for regulating the length of the interpolar link.

21. Balloon according to Claim 20, characterised in that the abovementioned regulating means (18) comprise means for winding the link (25), carried by the envelope near its lower or upper pole, so as to be placed in the path of said link, means (26) for driving said winding means in rotation and means (27) for controlling these drive means in accordance with predetermined cycles.

22. Balloon according to one of the preceding claims, possessing an envelope (1) arranged in rotational symmetry about an axis, which comprises an approximately cylindrical portion (1a), and an upper pole (2) and a lower pole (3), located on the axis of rotation and mutually connected by a link (4) which is not extensible or slightly extensible.

23. Aerostat balloon of the hot air balloon type for the purpose of carrying out the process according to Claim 1, comprising an envelope (29) of flexible material, open at its lower pole, a burner (35), attached close to the latter and means for feeding said burner with combustion fluid from a reservoir, said balloon being characterised in that it comprises an interpolar link (31) which extends between its upper pole and its lower pole, said link being coupled with the feeding means for the burner in such a way that the flow rate of the combustion fluid is adjusted as a direct function of the tension on said link.

## Patentansprüche

1. Verfahren zum Einstellen der Höhe eines Freiballons, umfassend geeignete Mittel zur Veränderung seines spezifischen Gewichts, wobei besagtes Verfahren dadurch gekennzeichnet ist, dass es darin besteht, dass man einen Ballon verwendet, welcher mit einem sich zwischen seinem oberen Pol und seinem unteren Pol erstreckenden interpolaren Verbindungsglied (4, 15, 31) ausgerüstet ist, und die für die Veränderung des spezifischen Gewichts des Ballons geeigneten Mittel durch Einschaltung dieses interpolaren Verbindungsglieds derart steuert, dass eine Erhöhung der zur Beaufschlagung des besagten Verbindungsglieds aufgebrachten und durch die Verformung der Ballonhülle hervorgerufenen Spannung T auf diese Mittel zur Verminderung des spezifischen Gewichts einwirkt.

2. Verfahren nach Anspruch 1 mit Anwendung auf einen Ballon, welcher Entballastungsmittel (7 bis 12) umfasst, die geeignet sind, das Gewicht des Ballons zu vermindern, ohne seinen Rauminhalt wesentlich zu verändern, dadurch gekennzeichnet, dass die Entballastungsmittel durch das interpolare Verbindungsglied (4) derart gesteuert werden, dass dadurch Entballasten des Ballons herbeigeführt wird, wenn die Spannung T auf besagtem Verbindungsglied grösser als ein vorgegebener Schwellenwert $t_d$ wird.

3. Verfahren nach Anspruch 2, dadurch gekennzeichnet, dass die Entballastungsmittel (7 bis 13) im Laufe der Entballastung bei einer Spannung $T > t_d$ durch das interpolare Verbindungsglied (4) so gesteuert werden, dass eine direkt mit der Spannung T auf dem interpolaren Verbindungsglied und mit der Dauer der Wirkung dieser Spannung in Beziehung stehende Ballast-Masse ausgestossen wird.

4. Verfahren nach Anspruch 1 mit Anwendung auf einen Heissluft-Ballon, welcher mit einem mit Verbrennungs-Fluid gespeisten Brenner (35) versehen ist, dadurch gekennzeichnet, dass die Durchflussgeschwindigkeit des Verbrennungs-Fluids derart durch das interpolare Verbindungsglied (31) gesteuert wird, dass besagte Durchflussgeschwindigkeit wächst, wenn die Spannung T auf dem Verbindungsglied über einen vorgegebenen Schwellenwert $t'_d$ steigt.

5. Verfahren nach einem der Ansprüche 1, 2, 3 oder 4, welches es ermöglicht, einen Ballon im schlaffen Zustand auf gleichbleibender oder langsam veränderlicher Höhe zu halten, dadurch gekennzeichnet, dass man die Länge Lo des interpolaren Verbindungsglieds auf einen Wert einstellt, welcher grösser ist als der natürliche Abstand $D_p$ zwischen den beiden Polen im Vollzustand des Ballons oder ihm gleich ist.

6. Verfahren nach einem der vorangehenden Ansprüche mit Anwendung auf einen Ballon, welcher Mittel (16, 17) zur Veränderung seines spezifischen Gewichts im Sinne einer Verminderung oder im Sinne einer Erhöhung umfasst, dadurch gekennzeichnet, dass man besagte Mittel durch Einschaltung des interpolaren Verbindungsglieds (15) in der Weise steuert, dass eine Erhöhung der Spannung T auf besagtem Verbindungsglied auf diese Mittel zur Herabsetzung des spezifischen Gewichts einwirkt und eine Verminderung der besagten Spannung auf diese Mittel zur Erhöhung des besagten spezifischen Gewichts einwirkt.

7. Verfahren nach Anspruch 6 mit Anwendung auf einen Freiballon, welcher eine Verminderung der Masse des Ballons ermöglichende Entballastungsmittel (16) sowie eine Erhöhung seines spezifischen Gewichts ermöglichende Evakuierungsmittel für das aerostatische Gas (17) umfasst, wobei besagtes Verfahren dadurch gekennzeichnet ist, dass die Entballastungsmittel durch das interpolare Verbindungsglied (15) derart gesteuert werden, dass Entballastung herbeigeführt wird, wenn die Spannung T auf besagtem Verbindungsglied grösser als ein Schwellenwert $t_d$ wird, und dass die Evakuierungsmittel für das aerostatische Gas durch das Verbindungsglied (15) derart gesteuert werden, dass Evakuierung herbeigeführt wird, wenn die Spannung T auf besagtem Verbindungsglied geringer als ein Schwellenwert $t_e < t_d$ wird.

8. Verfahren nach Anspruch 7, welches es ermöglicht, die Höhe eines Ballons auf mehreren verstellbaren Flughöhen einzustellen, dadurch gekennzeichnet, dass man die Länge des interpolaren Verbindungsglieds (15) sich ändern lässt, um sie für jede Flughöhe auf eine solche Länge L zu setzen, dass die Spannung T auf besagtem Verbindungsglied auf dieser Höhe zwischen $t_e$ und $t_d$ liegt.

9. Verfahren nach Anspruch 6 mit Anwendung auf einen Heissluft-Ballon, welcher mit einem mit Verbrennungs-Fluid gespeisten Brenner (35) versehen ist, dadurch gekennzeichnet, dass die Durchflussgeschwindigkeit des Verbrennungsgases durch das interpolare Verbindungsglied (31) derart gesteuert wird, dass sie von einem Gleichgewichtswert wächst, wenn die Spannung T auf dem Verbindungsglied einen Schwellenwert $t'_d$ übersteigt, und dass sie von diesem Gleichgewichtswert abnimmt, wenn die Spannung T unter einen Schwellenwert $t'_e \leq t'_d$ sinkt.

10. Freiballon durch Durchführung des Verfahrens gemäss Anspruch 1, umfassend eine Hülle (1) aus biegsamem, dichtem Stoff, ein unter dem Ballon gelegenes Ballast-Sammelbecken (7) und ein Entballastungsorgan (9, 13), welches dem Sammelbecken zugeordnet und geeignet ist, den Abwurf von Ballast auf eine Steuerung hin herbeizuführen, wobei besagter Ballon dadurch gekennzeichnet ist, dass er ein interpolares Verbindungsglied (4, 15) umfasst, welches sich zwischen seinem oberen Pol (2) und seinem unteren Pol (3) erstreckt, wobei besagtes Verbindungsglied mit einem Entballastungsorgan derart gekuppelt ist, dass es dieses von einem vorbestimmten Spannungs-Schwellenwert $t_d$ ab betätigt.

11. Ballon nach Anspruch 10, bei welchem es sich bei dem Ballast-Sammelbecken (7) um ein am unteren Pol des Ballons angebrachtes Sammelbecken mit unter Druck stehendem Fluid und bei dem Entballungsorgan (9, 13) um ein mit einer Ausgangsöffnung des Sammelbeckens in Wechselwirkung stehendes Ventil handelt, dadurch gekennzeichnet, dass das Verbindungsglied (4, 15) an seinem unteren Ende am Entballastungsventil (9) befestigt ist.

12. Ballon nach Anspruch 11, dadurch gekennzeichnet, dass das Entballastungsventil (9) mit federnden Mitteln (12) ausgerüstet ist, welche es in seine geschlossene Stellung ziehen, wobei besagte federnde Mittel zwecks Einstellung des Schwellenwerts der Öffnungsspannung $t_d$ geeicht sind.

13. Ballon nach Anspruch 12, dadurch gekennzeichnet, dass das Entballastungsventil (13), welches zur Öffnung über einem Spannungs-Schwellenwert $t_d$ eingerichtet ist, dazu befähigt ist, sich dann unterhalb eines Schwellenwerts der Schliessungsspannung, $\theta_d < t_d$, wieder zu schliessen, sodass, wenn besagtes Ventil einmal offen ist, es in diesem Zustand verbleibt, solange die Spannung höher als $\theta_d$ bleibt.

14. Ballon nach Anspruch 12, dadurch gekennzeichnet, dass das Entballastungsventil (9), welches zur Öffnung oberhalb eines Spannungs-Schwellenwerts $t_d$ eingerichtet ist, dazu befähigt ist, sich dann unterhalb des gleichen Spannungs-Schwellenwerts wieder zu schliessen.

15. Ballon nach einem der Ansprüche 10, 11, 12, 13 oder 14, umfassend eine in seine Hülle eingearbeitete Evakuierungs-Öffnung für aerostatisches Gas sowie ein bewegliches Schliessorgan für diese (20), dadurch gekennzeichnet, dass das interpolare Verbindungsglied (15) mit dem Schliessorgan (20) derart gekuppelt ist, dass es dieses in Schliessrichtung von einem festgelegten Spannungs-Schwellenwert $t_e$ ab betätigt.

16. Ballon nach Anspruch 15, bei welchem die Evakuierungs-Öffnung und das bewegliche Schliessorgan (20) auf der Höhe des oberen Pols des Ballons angeordnet sind, dadurch gekennzeichnet, dass das Verbindungsglied (15) an seinem oberen Ende am Schliessorgan (20) derart angeschlossen ist, dass es dieses in Schliessrichtung betätigen kann, wobei besagtes Organ (20) federnden Mitteln (24) zugeordnet ist, welche es in seine Öffnungsstellung ziehen.

17. Ballon nach Anspruch 16, dadurch gekennzeichnet, dass das Schliessorgan (20) einerseits ein gegenüber und unter einer die Evakuierungs-Öffnung umgebenden Fläche gelegenes Ventil und andererseits Umschalthebel (21) umfasst, welche mit der Hülle an einer Zwischenstelle auf ihrer Strecke einstückig verarbeitet sind, wobei die Umschalthebel (21) jeweils an einem Ende mit dem Ventil und am anderen mit dem interpolaren Verbindungsglied verbunden sind.

18. Ballon nach einem der Ansprüche 16 oder 17, dadurch gekennzeichnet, dass die federnden Mittel (24) zur Einstellung des Schwellenwerts der Evakuierungsspannung $t_e$ auf einen vorbestimmten Wert geeicht sind, welcher unter dem Schwellenwert der Entballastungsspannung $t_d$ liegt.

19. Ballon nach einem der vorangehenden Ansprüche, dadurch gekennzeichnet, dass die Länge Lo seines interpolarem Verbindungsglieds grösser als der Abstand zwischen dem oberen und unteren Pol des Ballons im Vollzustand oder ihm gleich ist.

20. Ballon nach einem der vorangehenden Ansprüche, dadurch gekennzeichnet, dass er Regulierungsmittel (18) für die Länge des interpolaren Verbindungsglieds umfasst.

21. Ballon nach Anspruch 20, dadurch gekennzeichnet, dass die vorgenannten Regulierungsmittel (18) Windemittel für das Verbindungsglied (25) umfassen, welche von der Hülle in der Nähe seines unteren oder oberen Pols derart getragen werden, dass sie auf der Strecke des besagten Verbindungsglieds liegen, sowie Rotations-Antriebmittel (26) für besagte Windemittel und Mittel (27) zur Steuerung dieser Antriebmittel in vorbestimmtem Takt.

22. Ballon nach einem der vorangehenden Ansprüche, welcher eine rotationssymmetrisch um eine Achse angeordnete Hülle (1) aufweist, welche einen etwa zylinderförmigen Teil (1a) sowie einen oberen Pol (2) und einen unteren Pol (3) enthält, welche auf der Rotationsachse liegen und miteinander durch ein Verbindungsglied (4) verbunden sind, welches nicht dehnbar oder wenig dehnbar ist.

23. Aerostat-Ballon nach Art eines Heissluft-Ballons zwecks Durchführung des Verfahrens gemäss Anspruch 1, umfassend eine an seinem unteren Pol offene Hülle (29) aus biegsamem Stoff, einen nahe an diesem Pol angebrachten Brenner (35) und Mittel zum Speisen des besagten Brenners mit Verbrennungs-Fluid aus einem Sammelbecken, wobei besagter Ballon dadurch gekennzeichnet ist, dass er ein interpolares Verbindungsglied (31) umfasst, welches sich zwischen seinem oberen Pol und seinem unteren Pol erstreckt, und wobei besagtes Verbindungsglied mit den Speisemitteln für den Brenner derart gekuppelt ist, dass die Durchflussgeschwindigkeit des Verbrennungs-Fluids direkt nach der Spannung auf besagtem Verbindungsglied eingestellt wird.

Fig. 1

Fig. 3

Fig. 2

Fig. 4a  Fig. 4b  Fig. 4c  Fig. 4d  Fig. 4e

D

Lo

Fig. 5a  Fig. 5b  T< td  Fig.5c  td  Fig. 5d  Fig ·5e

9  9  9  9  9

R

Altitude

Fig. 6

Temps

0 069 403

Fig. 8

Fig. 7

Fig. 9

Fig. 10